# EUROPEAN PATENT APPLICATION

(11) **EP 4 502 659 A1**
(43) Date of publication of application: **05.02.2025**
(21) Application number: 23774261.4
(22) Date of filing: 03.02.2023
(51) Int. Cl.: G01S 17/86, G01C 3/06, G01S 7/481, G01S 7/484, G01S 7/4861, G01S 17/89

(54) **RANGE-FINDING DEVICE AND RANGE-FINDING METHOD**

(30) Priority: 24.03.2022 JP 2022049084
(71) Applicant: Sony Semiconductor Solutions Corporation, Atsugi-shi, Kanagawa 243-0014 (JP)
(72) Inventor: KAZAMA Ryohei, Atsugi-shi, Kanagawa 243-0014 (JP); KAJI Nobuaki, Atsugi-shi, Kanagawa 243-0014 (JP); WANG Yuning, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/003615
(87) International publication number: WO 2023/181662

(57) **Abstract**

[Object]

To provide a range-finding device capable of increasing a range-finding capability.

[Solving Means]

Provided is a range-finding device (1) according one aspect of the present disclosure including a first imaging section (10) that includes a light emission section (11) that emits spot light (L1) to one or more objects (101) being range-finding targets and a light reception section (12) that outputs a first image signal including data on distances to the objects on the basis of a result obtained by light reception of reflected light (L2) being the spot light reflected on the objects, a second imaging section (20) that outputs a second image signal obtained by converting a plurality of beams of color light incident at the time of imaging of the objects to an electric signal, and a control section (30) that controls drive of the light emission section (11) and the light reception section (12) on the basis of the first image signal and the second image signal.

## Description

### [Technical Field]

The present disclosure relates to a range-finding device and a range-finding method.

### [Background Art]

In recent years, in a field of object recognition, processing of measuring a distance between an object and a camera in a three-dimensional space and using this distance data for object recognition processing has been executed. As a method for acquiring this distance data, for example, the ToF method (Time of Flight) is known. In the ToF method, for example, the distance to the object can be measured on the basis of a time of flight of the light until spot light output from a light emission section is reflected on an object being a range-finding target and reaches a light reception section and the light speed.

As a range-finding device in the ToF method as described above, there exists a device which has a function of adjusting a size of the spot light (spot diameter) according to the distance to the object being the range-finding target.

### [Citation List]

### [Patent Literature]

[PTL 1]
Japanese Patent Laid-open No. 2014-119428

### [Summary]

### [Technical Problem]

The size of the spot light is adjusted on the light emission section side. However, when only the simple adjustment is made on the light emission section side, mismatch with the light reception section side may occur. When this mismatch occurs, a range-finding capability possibly decreases.

In view of the problem described above, the present disclosure provides a range-finding device and a range-finding method capable of increasing the range-finding capability.

### [Solution to Problem]

A range-finding device according to one aspect of the present disclosure includes a first imaging section that includes a light emission section that emits spot light to one or more objects being range-finding targets and a light reception section that outputs a first image signal including data on distances to the objects on the basis of a result obtained by light reception of reflected light being the spot light reflected on the objects, a second imaging section that outputs a second image signal obtained by converting a plurality of beams of color light incident at the time of imaging of the objects to an electric signal, and a control section that controls drive of the light emission section and the light reception section on the basis of the first image signal and the second image signal.

The light emission section may include a light source section that generates the spot light and an optical system that adjusts a spot diameter of the spot light, the light reception section may include a light reception sensor that includes a plurality of pixels for receiving the reflected light and generating the first image signal, and the control section may execute determination processing relating to a resolution of the object on the basis of the first image signal and the second image signal, may execute calculation processing of calculating, according to a determination result of the resolution, a drive change amount of the light source section, a control amount of the optical system, and an exposure position in the plurality of pixels, and may control drive of the light source section, the optical system, and the light reception sensor on the basis of a calculation result.

The control section may execute the determination processing and the calculation processing for a main measurement object selected from a plurality of objects having distances from the range-finding device different from one another.

The control section may extract a pixel region in which the main measurement object is disposed from Depth image data generated by processing the first image signal and may extract a contour of the main measurement object from an RGB image generated by processing the second image signal.

The resolution may be the number of exposure pixels in the pixel region of the main measurement object, and the control section may execute the calculation processing in a case in which the number of exposure pixels is equal to or less than a threshold value set in advance according to a range-finding criterion.

The control section may calculate a resolution and a light reception amount of the light reception sensor required to satisfy the range-finding criterion in a case in which the number of exposure pixels is equal to or smaller than the threshold value.

The control section may calculate the drive change amount and the control amount on the basis of the light reception amount and may calculate the exposure position on the basis of the resolution.

The control section may calculate the drive change amount and the control amount such that luminance and the spot diameter of the spot light change according to the light reception amount.

The control section may calculate the exposure position such that the exposure pixel is included in the pixel region of the main measurement object according to the resolution.

The control section may calculate the control amount such that the spot diameter increases in a case in which, of the plurality of objects, the main measurement object is disposed closer to the range-finding device than another object.

The control section may calculate the exposure position such that only the pixel region of the main measurement object is the exposure pixel in a case in which, of the plurality of objects, the main measurement object is disposed farther from the range-finding device than another object.

The control section may calculate the control amount for reducing an illumination region of the spot light such that only the exposure pixel receives the reflected light.

A range-finding method according one aspect of the present disclosure is a range-finding-method through use of a first imaging section including a light emission section and a light reception section and a second imaging section. In this range-finding method, the light emission section emits spot light toward one or more objects being range-finding targets, the light reception section outputs a first image signal including data on a distance to the object on the basis of a result obtained by light reception of reflected light being the spot light reflected on the object, the second imaging section outputs a second image signal obtained by converting a plurality of beams of color light incident at the time of imaging of the objects to an electric signal, and drive of the light emission section and the light reception section is controlled on the basis of the first image signal and the second image signal.

### [Brief Description of Drawings]

[FIG. 1]

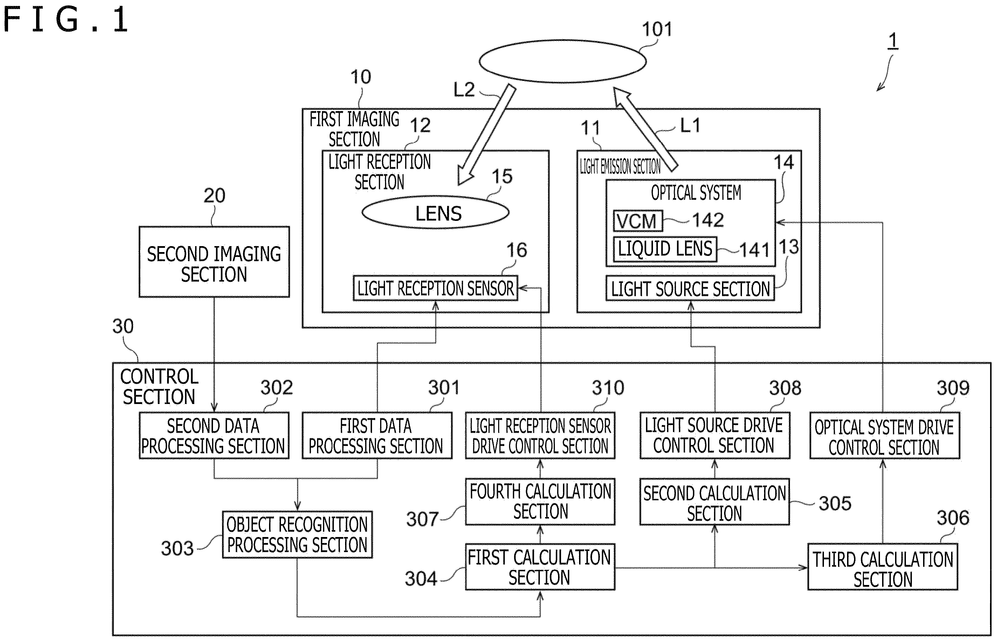

   FIG. 1 is a block diagram for illustrating a configuration of a range-finding device according to a first embodiment.
[FIG. 2]

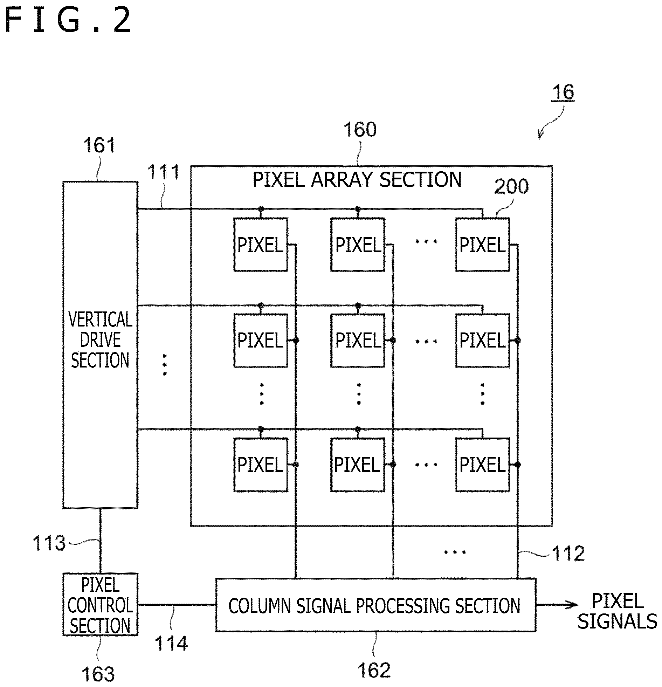

   FIG. 2 is a block diagram for illustrating a configuration example of a light reception sensor.
[FIG. 3]

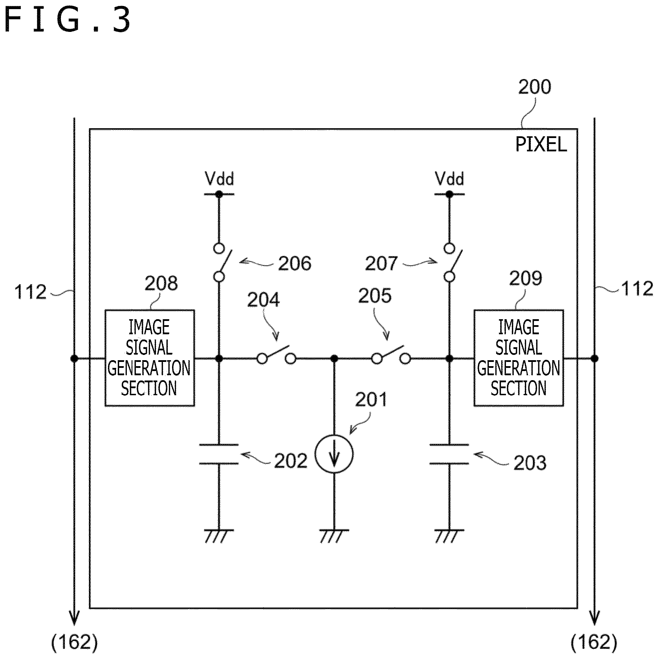

   FIG. 3 is a circuit diagram for illustrating a configuration example of a pixel.
[FIG. 4]

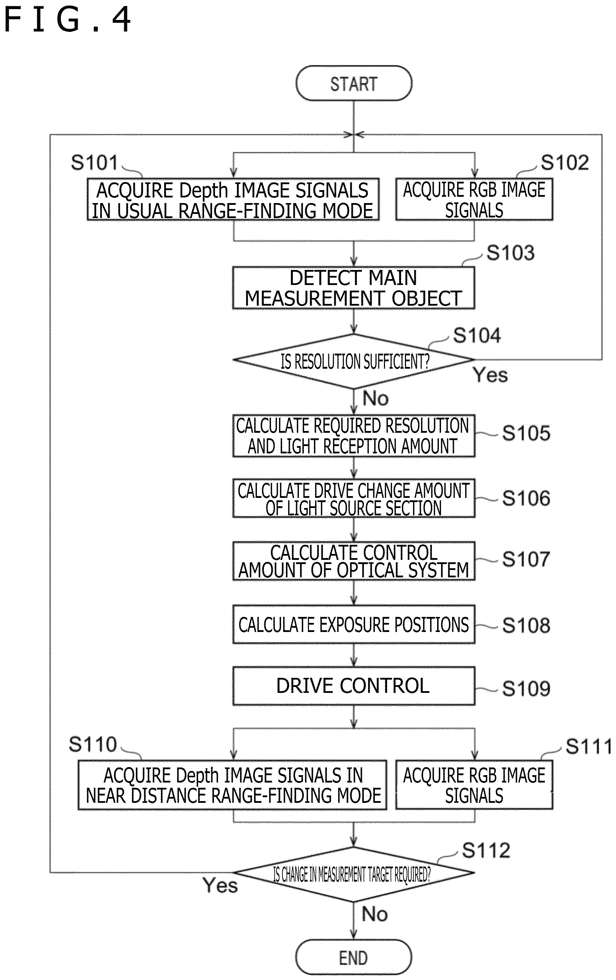

   FIG. 4 is a flowchart for illustrating an example of a processing procedure of a control section according to the first embodiment.
[FIG. 5]

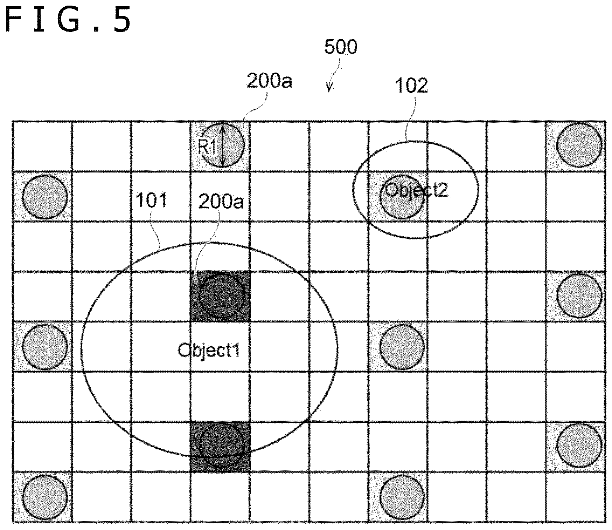

   FIG. 5 is a schematic diagram of Depth image data imaged in a usual range-finding mode.
[FIG. 6]

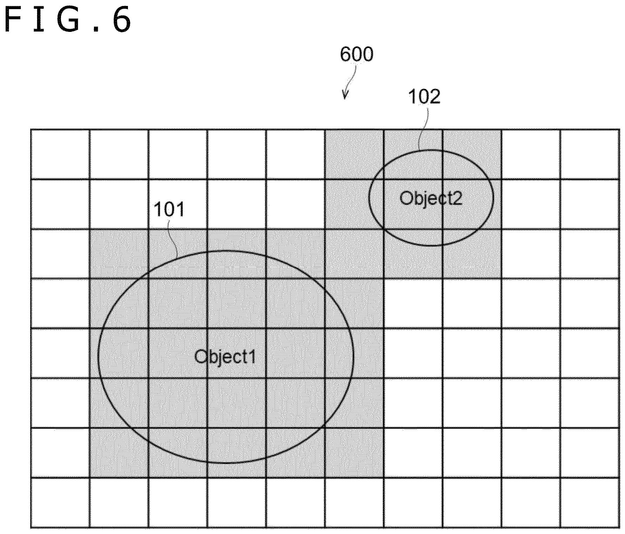

   FIG. 6 is a schematic diagram of RGB image data.
[FIG. 7]

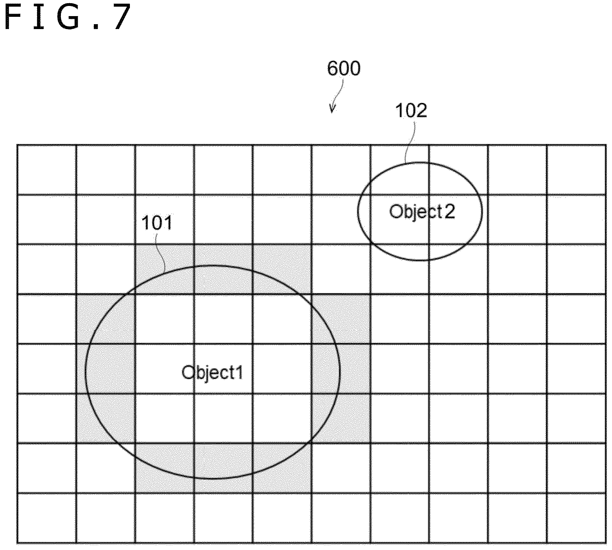

   FIG. 7 is a diagram for describing a step of calculating exposure positions.
[FIG. 8]

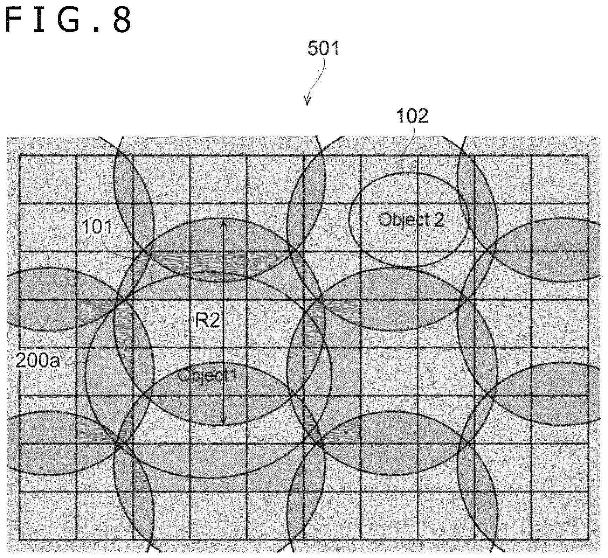

   FIG. 8 is a schematic diagram for illustrating an example of the Depth image data imaged in a near-distance range-finding mode.
[FIG. 9]

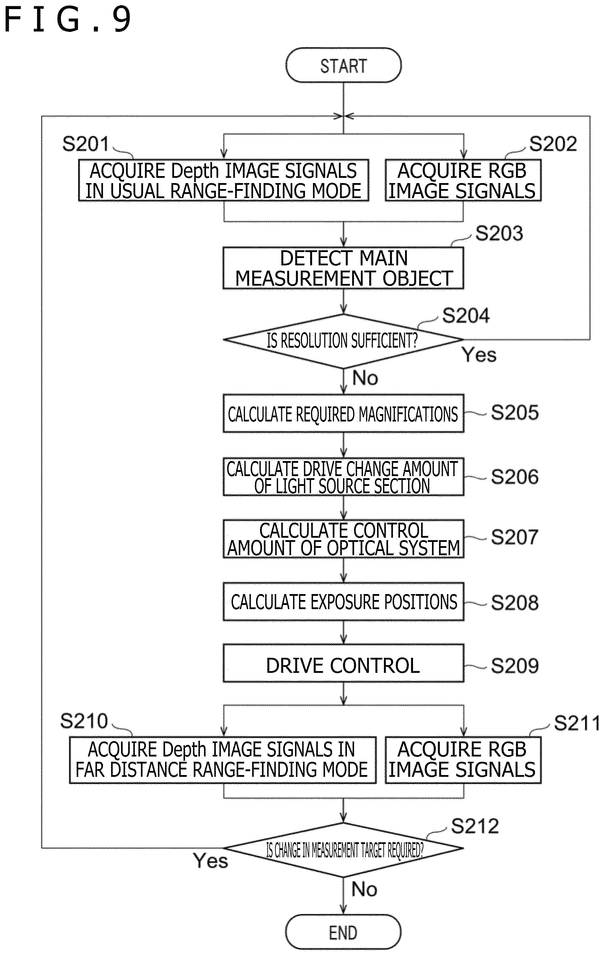

   FIG. 9 is a flowchart for illustrating an example of a processing procedure of the control section according to a second embodiment.
[FIG. 10]

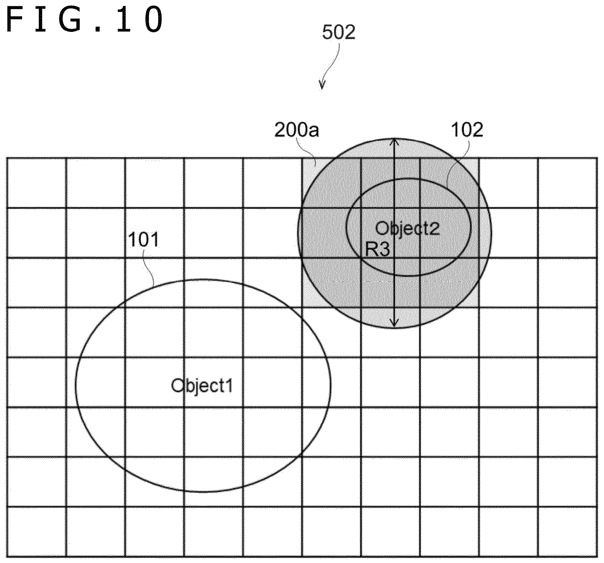

   FIG. 10 is a schematic diagram for illustrating an example of the Depth image data imaged in a far-distance range-finding mode.
[FIG. 11]

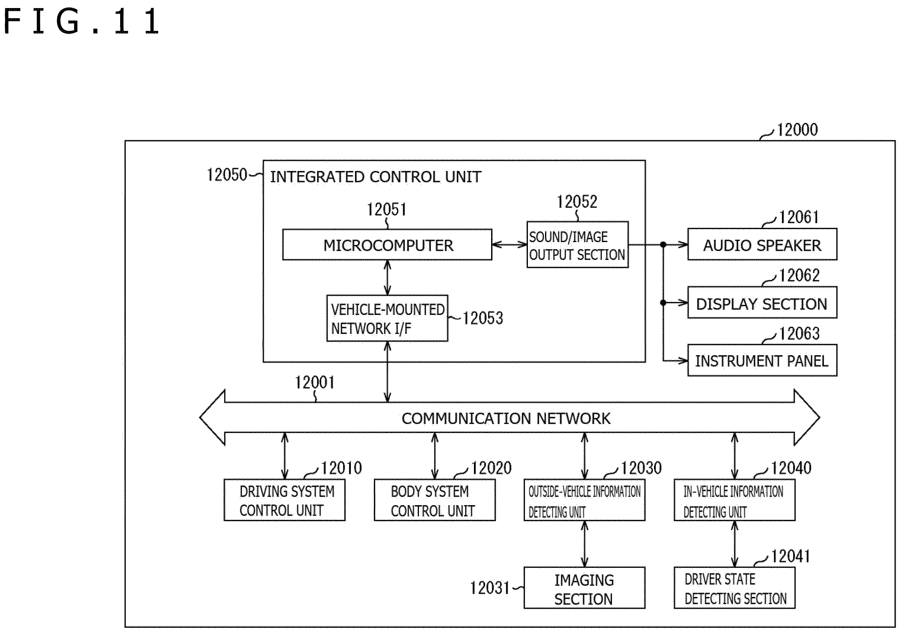

   FIG. 11 is a block diagram depicting an example of schematic configuration of a vehicle control system.
[FIG. 12]

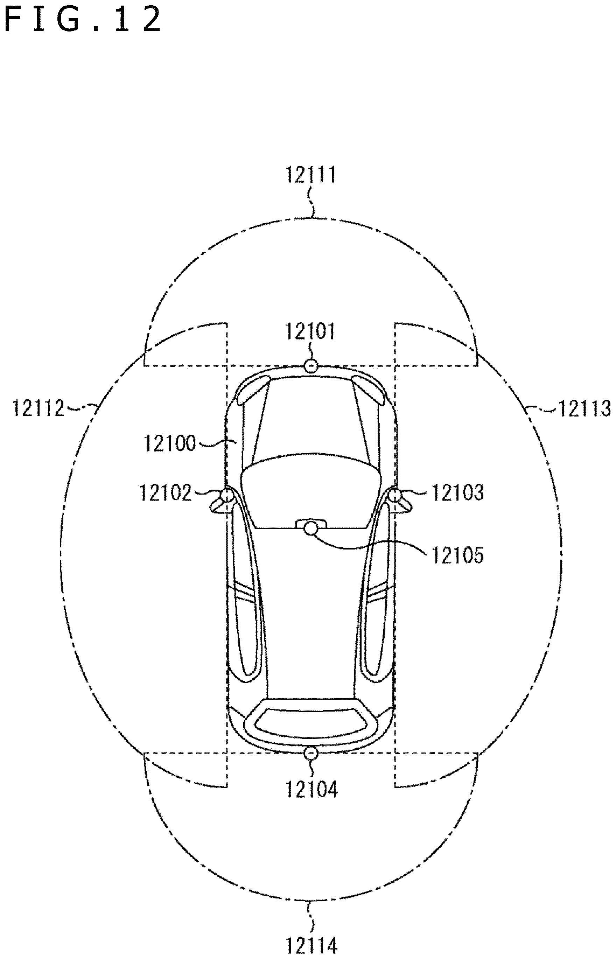

   FIG. 12 is a diagram of assistance in explaining an example of installation positions of an outside-vehicle information detecting section and an imaging section.

### [Description of Embodiments]

Embodiments of the present disclosure are now described in detail with reference to the accompanying drawings. Note that components having substantially identical functional configurations in the present description and the drawings are given identical reference signs to omit a redundant description.

Moreover, in the present description and the drawings, similar components in the embodiments may be given different alphabets following the same reference sign, thereby distinguishing these components from one another. However, in a case in which the similar components are not required to be distinguished from one another, the same reference sign is given, and the alphabets are omitted.

One or a plurality of embodiments (including examples and modification examples) described below can be embodied independently of one another. Meanwhile, at least a part of each of the plurality of embodiments described below may be embodied by appropriately combining with at least a part of another embodiment. These plurality of embodiments can include novel features different from one another. Thus, these plurality of embodiments can contribute to solve objects or problems different from one another and hence can provide effects different from one another.

### (First Embodiment)

FIG. 1 is a block diagram for illustrating a configuration of a range-finding device according to a first embodiment. The range-finding device 1 illustrated in FIG. 1 includes a first imaging section 10, a second imaging section 20, and a control section 30.

First, the first imaging section 10 is described. The first imaging section 10 is an example of a Depth camera which outputs Depth image signals (first image signals) including data on a distance to an object 101 being a range-finding target. This first imaging section 10 includes a light emission section 11 and a light reception section 12.

The light emission section 11 includes a light source section 13 and an optical system 14. The light source section 13 includes, for example, one or more addressable optical semiconductor devices which emit laser light, and a diffraction grating. As this optical semiconductor device, for example, a light emitting diode of the vertical cavity surface emitting laser (VCSEL) type can be used. The light source section 13 can adjust luminance by changing supplied electric power through control of the control section 30. Moreover, regarding spot light L1, a plurality of beams of the spot light L1 are can be emitted through the diffraction grating.

The optical system 14 includes optical components capable of adjusting the size of the spot light L1 such as a liquid lens 141 and a voice coil motor (hereinafter referred to as a VCM) 142. The liquid lens 141 is disposed in a front side with respect to the light source section 13 in a travel direction of the light. Thus, transmission light through the liquid lens 141 illuminates, as the spot light L1, the object 101. At this time, the VCM 142 of the optical system 14 adjusts a focal point of the liquid lens 141 and the like according to control of the control section 30. As a result, the size of the spot light L1 can be adjusted. Moreover, the spot light L1 is reflected by the object 101 and is received, as reflected light L2, by the light reception section 12.

The reception section 12 includes a lens 15 and a light reception sensor 16. The lens 15 forms an image of the reflected light L2 on the light reception sensor 16. The light reception sensor 16 is an example of a Depth sensor which generates Depth image signals corresponding to the reflected light L2. This light reception sensor 16 can include, for example, an imaging device of the CMOS (Complementary Metal Oxide Semiconductor) type. The light reception sensor 16 images the reflected light L2 received in a period synchronized with a light emission period and a non-light emission period of the spot light L1, thereby generating a plurality of Depth image signals. The light reception sensor 16 outputs the generated Depth image signals to the control section 30. With reference to FIG. 2, a configuration of the light reception sensor 16 is now described.

FIG. 2 is a block diagram for illustrating a configuration example of the light reception sensor 16. The light reception sensor 16 is a semiconductor device which generates the Depth image of the object 101. The light reception sensor 16 includes a pixel array section 160, a vertical drive section 161, a column signal processing section 162, and a pixel control section 163.

A plurality of pixels 200 are arranged in a two-dimensional matrix form on the pixel array section 160. Each pixel 200 generates the Depth image signal of the object 101 based on the received reflected light L2. To each pixel 200, a photoelectric conversion section which executes photoelectric conversion of the incident light is provided. As this photoelectric conversion section, for example, a photodiode can be used. To each pixel 200, a signal line 111 and a signal line 112 are connected. The signal line 111 is disposed for each row of the pixel array section 160 and is connected in common to a plurality of pixels 200 disposed on the one row. The signal line 112 is disposed for each column of the pixel array section 160 and is connected in common to a plurality of pixels 200 disposed on the one column. Each pixel 200 generates the image signal on the basis of a pixel control signal transmitted via the signal line 111 from the vertical drive section 161. Moreover, each pixel 200 outputs the image signal to the column signal processing section 162 via the signal line 112.

The vertical drive section 161 includes a shift register, an address decoder, and the like and generates the pixel control signals for the pixels 200. The vertical drive section 161 generates the pixel control signal for each row of the pixel array section 160 and sequentially outputs the pixel control signal via the signal lines 111.

The column signal processing section 162 processes the Depth image signal of each pixel 200. The column signal processing section 162 simultaneously processes the Depth image signals from the plurality of pixels 200 belonging to one row on the pixel array section 160 transmitted via the signal lines 112. This processing includes, for example, analog-to-digital conversion processing of converting the analog Depth image signal generated by the pixel 200 to a digital Depth image signal. The Depth image signal after the processing is output to the control section 30.

The pixel control section 163 controls the vertical drive section 161 and the column signal processing section 162. The pixel control section 163 outputs control signals via a signal line 113 and a signal line 114, thereby controlling the vertical drive section 161 and the column signal processing section 162.

FIG. 3 is a circuit diagram for illustrating a configuration example of the pixel 200. The pixel 200 includes a photoelectric conversion section 201, charge holding sections 202 and 203, transfer sections 204 and 205, reset sections 206 and 207, and image signal generation sections 208 and 209. Each of the transfer sections 204 and 205 and the reset sections 206 and 207 may include, for example, an N-channel MOS transistor. Moreover, to the pixel 200, a power supply line Vdd is wired. This power supply line Vdd is a wire for supplying a power supply to the pixel 200.

The photoelectric conversion section 201 applies photoelectric conversion to the incident light. This photoelectric conversion section 201 may include a photodiode. The photodiode supplies charge generated by the photoelectric conversion to an external circuit. Thus, as illustrated in FIG. 3, the photoelectric conversion section 201 can be represented as a constant current circuit. The photoelectric conversion section 201 has one end grounded and the other end supplying a sink current according to the incident light.

The charge holding sections 202 and 203 hold the charge generated by the photoelectric conversion section 201. Each of these charge holding sections 202 and 203 can include a floating diffusion (FD) region which holds the charge in a diffusion region formed in a semiconductor substrate.

The transfer sections 204 and 205 transfer the charge generated by the photoelectric conversion section 201 to the charge holding sections 202 and 203, respectively. The transfer section 204 causes the photoelectric conversion section 201 and the charge holding section 202 to be conductive to each other, thereby transferring the charge of the photoelectric conversion section 201 to the charge holding section 202. Moreover, the transfer section 205 causes the photoelectric conversion section 201 and the charge holding section 203 to be conductive to each other, thereby transferring the charge of the photoelectric conversion section 201 to the charge holding section 203.

The reset sections 206 and 207 reset the charge holding sections 202 and 203, respectively. The reset section 206 causes the charge holding section 202 and the power supply line Vdd to be conductive to each other to discharge the charge of the charge holding section 202 to the power supply line Vdd, thereby executing reset. Similarly, the reset section 207 causes the charge holding section 203 and the power supply line Vdd to be conductive to each other, thereby resetting the charge holding section 203.

The image signal generation sections 208 and 209 generate the Depth image signals on the basis of the charge held in the charge holding sections 202 and 203, respectively. The image signal generation section 208 generates the Depth image signal on the basis of the charge held in the charge holding section 202 and outputs the Depth image signal to the signal line 112. The image signal generation section 209 generates the Depth image signal on the basis of the charge held in the charge holding section 203 and outputs the Depth image signal to the signal line 112.

Note that the pixel control signal for the transfer sections 204 and 205, the reset sections 206 and 207, and the image signal generation sections 208 and 209 is transmitted via the signal line 111, which is not illustrated.

The Depth image signal can be generated as follows. First, the reset sections 206 and 207 are caused to be conductive, thereby resetting the charge holding sections 202 and 203, respectively. After this reset is finished, the transfer sections 204 and 205 are caused to be conductive, thereby transferring the charge generated by the photoelectric conversion section 201 to the charge holding section 202 and holding the charge therein, respectively. At this time, the transfer sections 204 and 205 are alternately brought into the conductive state, thereby distributing the charge generated by the photoelectric conversion section 201 to the charge holding sections 202 and 203. This distribution of the charge is executed for a plurality of times, thereby causing the charge generated by the photoelectric conversion section 201 to be accumulated in the charge holding sections 202 and 203. This period for accumulating the charge is referred to as an accumulation period.

After the predetermined accumulation period has elapsed, the transfer sections 204 and 205 are brought into a non-conductive state. Ater that, the image signal generation sections 208 and 209 generate and output the image signals on the basis of the charge accumulated in the charge holding sections 202 and 203, respectively.

In the accumulation period described above, the charge of the photoelectric conversion section 201 is distributed and is accumulated by the transfer sections 204 and 205, and the Depth image signal is generated on the basis of each piece of the accumulated charge. This distribution by the transfer sections 204 and 205 is executed in synchronism with the cycle of the light emission period and the non-light emission period of the spot light L1 of the light emission section 11. As a result, synchronous detection of the reflected light incident to the light reception sensor 16 can be executed. Moreover, the indirect ToF method of detecting a time of flight of the light from the light emission section 11 to the light reception sensor 16 via the object 101 as a phase difference with respect to the cycle of the light emission and the non-light emission of the light emission section 11 can be executed by executing this synchronous detection at different phases and generating a plurality of Depth image signals.

Note that the circuit configuration of the pixel 200 is not limited to the circuit configuration illustrated in FIG. 3. For example, the pixel 200 may have a circuit configuration which executes the direct ToF method of using a timer to directly clock a round trip time of the light between the range-finding device 1 and the object 101.

A description is now given of the second imaging section 20. The second imaging section 20 is an example of an RGB camera which converts beams of light in, for example, red (R), green (G), and blue (B) into electric signals, respectively. The second imaging section 20 generates RGB image signals (second image signals) obtained by converting the red light, the green light, and the blue light incident at the time of the imaging of the object 101 to electric signals. Moreover, the second imaging section 20 outputs the generated RGB image signals to the control section 30.

With reference again to FIG. 1, a description is now given of the control section 30. The control section 30 includes a first data processing section 301, a second data processing section 302, an object recognition processing section 303, a first calculation section 304, a second calculation section 305, a third calculation section 306, a fourth calculation section 307, a light source drive control section 308, an optical system drive control section 309, and a light reception sensor drive control section 310.

The first data processing section 301 processes the Depth image signals generated by the light reception sensor 16. In this embodiment, the first data processing section 301 measures the time of flight of the light on the basis of the Depth image signals input from the light reception sensor 16, thereby calculating data on a distance to the object 101 for each pixel 200.

For example, the first data processing section 301 first detects a bright region and a dark region in the pixel array section 160. The bright region can be detected on the basis of, for example, a difference of the image signal of each of the plurality of pixels 200. The reflected light L2 incident to the bright region is light having luminance higher than that of the light incident to the dark region. Thus, a bright region image signal generated by the pixel 200 in the bright region is a signal at a level higher than that of a dark region image signal generated by the pixel 200 in the dark region. On the basis of the difference between the signal levels, the bright region can be detected by detecting a region which is a region of the pixels 200 of the pixel array section 160 and is illuminated by the light having high luminance. Meanwhile, the dark region can be detected as a region different from the bright region. For example, the first data processing section 301 can detect a region around the bright region as the dark region.

Note that the bright region can be detected by, for example, acquiring a region illuminated by pattern light. A position of a region illuminated by the pattern light emitted from the light emission section 11 of the first imaging section 10 may be acquired in advance, and a region of the pixel array section 160 corresponding to this acquired position of the region can be detected as the bright region.

After that, the first data processing section 301 generates a difference image signal being a difference between the bright region image signal and the dark region image signal. The bright region image signal is an image signal based on the reflected light L2, and the bright region image signal can be used to detect the distance to the object 101. However, external light other than the reflected light L2, for example, environment light such as the sun light is incident to the pixel 200. An image signal based on this external light is superimposed on the bright region image signal, resulting in occurrence of an error in the distance measurement. The image signal based on the external light is also superimposed on the dark region image signal. Thus, an external light component of the bright region image signal can be removed by obtaining a difference between the bright region image signal and the dark region image signal.

After that, the first data processing section 301 detects the distance on the basis of the difference image signal. The first data processing section 301 detects the time of flight according to the object 101 on the basis of the difference image signal, thereby detecting the distance. The detection of the time of flight can be executed on the basis of, for example, a ratio between the difference image signal generated in the light emission period and the difference image signal generated in the non-light emission period.

After that, the first data processing section 301 calculates the distance data indicating the detected distance for each pixel 200. After that, the first data processing section 301 arranges the calculated distance data in an array corresponding to the position of each pixel 200, thereby generating a depth map indicating relative distances to the object 101 as the Depth image data. The first data processing section 301 outputs the generated Depth image data to the object recognition processing section 303.

The second data processing section 302 processes the RGB image signals generated by the second imaging section 20. In the present embodiment, the second data processing section 302 arranges a signal value (pixel value) of each of the acquired red light, green light, and blue light acquired for each pixel by the second imaging section 20 in association with the array of each pixel, thereby generating RGB image data. The second data processing section 302 outputs the generated RGB image data to the object recognition processing section 303.

The object recognition processing section 303 uses the Depth image data generated by the first data processing section 301 and the RGB image data generated by the second data processing section 302 to execute recognition processing for the object 101. The object recognition processing section 303 extracts a pixel region in which the object 101 is disposed from, for example, a background region of the Depth image data. After that, the object recognition processing section 303 uses the RGB image data to extract a contour of the object 101 on the basis of the position of the object 101 extracted from the Depth image data. Note that, in a case in which the object 101 is, for example, the face of a human, the object recognition processing section 303 can extract not only the contour of the face, but also feature points such as the eyes, the nose, and the mouth.

The first calculation section 304 calculates a resolution and a light reception amount of the light reception sensor 16 required to satisfy a range-finding criterion defined in advance for the object 101 on the basis of the contour of the object 101 extracted by the object recognition processing section 303. This light reception amount corresponds to, in other words, a light amount of the reflected light L2.

The second calculation section 305 calculates a drive change amount for the light source section 13 on the basis of the light reception amount calculated by the first calculation section 304. The drive change amount is, for example, a change amount of electric power supplied to the light source section 13. The luminance of the spot light L1 is changed by changing the supplied electric power, and hence the light reception amount of the light reception sensor 16 can be adjusted.

The third calculation section 306 calculates a control amount for the optical system 14 on the basis of the light reception amount calculated by the first calculation section 304. The third calculation section 306 executes calculation of, for example, converting the light amount to a movement amount of the liquid lens 141 in the optical system 14. As the liquid lens 141 moves, the focal point of the spot light L1 changes. As a result, the size of the spot light L1, specifically, a spot diameter, can be adjusted.

The fourth calculation section 307 calculates exposure positions of the light reception sensor 16 on the basis of the resolution calculated by the first calculation section 304. In this configuration, the resolution corresponds to the number of exposure pixels which are of the plurality of pixels 200 arranged in the light reception sensor 16 and belong to the bright region. Thus, when the number of exposure pixels is increased, the resolution increases. The fourth calculation section 307 calculates positions of the exposure pixels corresponding to the resolution.

The light source drive control section 308 controls the drive of the light source section 13 on the basis of the drive change amount calculated in the second calculation section 305. Specifically, the light source drive control section 308 changes the electric power supplied to the light source section 13, thereby controlling the luminance of the spot light L1 such that the light reception amount of the light reception sensor 16 satisfies the range-finding criterion.

The optical system drive control section 309 controls a drive amount of the optical system 14 on the basis of the control amount calculated in the third calculation section 306. Specifically, the optical system drive control section 309 adjusts a voltage supplied to the VCM 142, thereby controlling the movement amount of the liquid lens 141. As a result, the size of the spot light is adjusted such that the resolution of the light reception sensor 16 satisfies the range-finding criterion.

The light reception sensor drive control section 310 controls the light reception sensor 16 on the basis of the exposure positions calculated in the fourth calculation section 307. The light reception sensor drive control section 310 specifically executes, through the vertical drive section 161, the column signal processing section 162, and the pixel control section 163 of the light reception sensor 16, such control processing that, of the plurality of the pixels 200, only exposure pixels 200a disposed at the exposure positions output the Depth image signals.

A description is now given of processing of the range-finding device 1 according to the present embodiment configured as described above. In this configuration, a description is mainly given of a processing content of the control section 30 under such a range-finding condition that two objects different from each other in distance to the range-finding device 1 are imaging targets.

FIG. 4 is a flowchart for illustrating an example of a processing procedure of the control section 30 according to the first embodiment. In this flowchart, first, the first data processing section 301 acquires the Depth image signals from the light reception sensor 16 of the first imaging section 10 (Step S101), and the second data processing section 302 acquires the RGB image signals from the second imaging section 20 (Step S102).

In Step S101, the first imaging section 10 generates the Depth image signals in the usual range-finding mode in which the liquid lens 141 is disposed at a just focus position in the optical system 14. Moreover, it is desired that the Depth image signals acquired in Step S101 and the RGB image signals acquired in Step S102 be image signals generated at the same imaging timing.

The first data processing section 301 processes the Depth image signals to generate the Depth image data. Moreover, the second data processing section 302 processes the RGB image signals to generate the RGB image data.

FIG. 5 is a schematic diagram of the Depth image data imaged in the usual range-finding mode. The Depth image data 500 illustrated in FIG. 5 is generated when the reflected light L2 of the spot light L1 set to a spot diameter R1 is received by a plurality of exposure pixels 200a of the light reception sensor 16. In this Depth image data 500, images of the object 101 (object 1) and an object 102 (object 2) appear. A distance from the range-finding device 1 to the object 101 is shorter than a distance from the range-finding device 1 to the object 102.

FIG. 6 is a schematic diagram of the RGB image data. Also in RGB image data 600 illustrated in FIG. 6, images of the object 101 and the object 102 appear. In each pixel of the RGB image data 600, the signal values (pixel values) obtained through the photoelectric conversion from the red light, the blue light, and the blue light are indicated.

When the Depth image data and the RGB image data are generated as described above, the object recognition processing section 303 detects any one of the object 101 and the object 102 as a main measurement object (Step S103). In Step S103, the object recognition processing section 303 detects the positions of the object 101 and the object 102 from the background region of the Depth image data 500. After that, the object recognition processing section 303 extracts a contour of each of the object 101 and the object 102 from the RGB image data 600 on the basis of the detected position of each object. After that, the object recognition processing section 303 calculates an area of each object on the basis of each of the recognized contours. In the present embodiment, the object recognition processing section 303 detects, as the main measurement object, the object 101 which is of the object 101 and the object 102 and is larger in area.

Note that the detection method for the main measurement object is not limited to the method described above. For example, the object recognition processing section 303 may detect, as the main measurement object, an object tapped by a user on a screen, that is, an object specified by a selection operation of the user.

When the main measurement object is detected as described above, the object recognition processing section 303 executes processing of determining whether or not the resolution for the main measurement object is sufficient (Step S104). In Step S104, it is determined whether or not the resolution of the main measurement object, in other words, the number of the exposure pixels 200a in the pixel region of the main measurement object in the Depth image data 500 exceeds a threshold value. The threshold value is set in advance according to a range-finding criterion for an application of the range-finding device 1. As the application of the range-finding device 1, there exists, for example, generation of a three-dimensional image.

In a case in which the resolution of the main measurement object is higher than the threshold value, the object recognition processing section 303 determines that this resolution is sufficient (Yes in Step S104). In this case, the processing procedure returns to the processing in Step S101 and Step S102.

Meanwhile, in a case in which the resolution of the main measurement object is equal to or lower than the threshold value, the object recognition processing section 303 determines that this resolution is insufficient (No in Step S104).

In the case described above, the first calculation section 304 calculates the resolution and the light reception amount of the light reception sensor 16 required to satisfy the measurement criterion (Step S105). In Step S105, the first calculation section 304 calculates the number of exposure pixels 200a for exceeding the threshold value. Moreover, the first calculation section 304 calculates an upper limit spot diameter Rmax of the spot light L1 on the basis of the following equation (1). Rmax = R1 × (maximum range-finding range/measurement object distance)

In the equation (1) above, R1 is a spot diameter in the usual range-finding mode. Moreover, the range-finding range is inversely proportional to the square of the distance to the measurement object and is proportional to the light reception amount of the light reception sensor 16. Moreover, the light reception amount is inversely proportional to the square of the upper limit spot diameter Rmax. Thus, the first calculation section 304 calculates the light reception amount on the basis of the calculated upper limit spot diameter Rmax.

After that, the second calculation section 305 calculates the drive change amount of the light source section 13 on the basis of the light reception amount calculated in Step S105 (Step S106). In Step S106, for example, the second calculation section 305 calculates, as the drive change amount, a difference between electric power supplied to the light source section 13 converted from the light reception amount calculated in Step S105 and the electric power supplied to the light source section 13 in the usual range-finding mode.

After that, the third calculation section 306 calculates the control amount of the optical system 14 on the basis of the light reception amount calculated in Step S105 (Step S107). In Step S107, the third calculation section 306 uses, for example, a conversion coefficient set in advance to convert the light reception amount to the movement amount of the liquid lens 141.

After that, the fourth calculation section 307 calculates the exposure positions of the light reception sensor 16 on the basis of the resolution calculated in Step S105 (Step S108). A description is now given of an example of the processing in Step S108 with reference to FIG. 7.

FIG. 7 is a diagram for describing the step of calculating the exposure positions. In the example illustrated in FIG. 7, the fourth calculation section 307 identifies a pixel region containing the contour of the object 101 extracted through use of the RGB image data 600. The fourth calculation section 307 calculates the positions of pixels 200 corresponding to this pixel region in the Depth image data 500 as the positions of the exposure pixels 200a.

After that, the light source drive control section 308, the optical system drive control section 309, and the light reception sensor drive control section 310 execute the drive control for the light source section 13, the optical system 14, and the light reception sensor 16, respectively, on the basis of the results of the calculation processing described above (Step S109). In Step S109, the light source drive control section 308 changes the electric power supplied to the light source section 13 on the basis of the drive change amount calculated in Step S106. Moreover, the optical system drive control section 309 adjusts the voltage supplied to the VCM 142 on the basis of the control amount calculated in Step S107, thereby moving the liquid lens 141. Further, the light reception sensor drive control section 310 executes such control processing that the Depth image signal is output from only each of the exposure pixels 200a disposed at the exposure positions calculated in Step S108.

The imaging mode of the first imaging section 10 is changed from the usual range-finding mode to a near distance range-finding mode by the processing in Step S105 to Step S109. After that, the first imaging section 10 generates the Depth image signals in the near-distance range-finding mode, and additionally, the second imaging section 20 generates the RGB image signals.

After that, the first data processing section 301 acquires the Depth image signals in the near-distance range-finding mode (Step S110), and the second data processing section 302 acquires the RGB image signals (Step Sill). The first data processing section 301 processes the Depth image signals to generate the Depth image data. The second data processing section 302 processes the RGB image signals to generate the RGB image data.

FIG. 8 is a schematic diagram for illustrating an example of the Depth image data imaged in the near-distance range-finding mode. The Depth image data 501 illustrated in FIG. 8 is generated by emitting the spot light L1 set to a spot diameter R2 from the light emission section 11. The spot diameter R2 is increased from the spot diameter R1 in the usual range-finding mode such that the contour of the object 101 is included in the exposure pixels 200a. Thus, in this Depth image data 501, the resolution of the object 101 is higher than that in the Depth image data 500 imaged in the usual range-finding mode.

Note that, when the spot diameter of the spot light L1 is increased, there can occur a pixel 200 on which the spot regions overlap each other in the light reception sensor 16. Thus, in a case in which the light emission section 11 simultaneously emits the spot light L1 in a plurality of colors, the range-finding precision of this pixel 200 decreases. Therefore, in a case in which the light emission section 11 can emit the spot light L1 in the plurality of colors, the light source drive control section 308 controls light emission timings of the light emission section 11 such that beams of the spot light L1 in the same color are emitted at the same timing and beams of the spot light L1 in difference colors are emitted at different timings.

Moreover, in a case in which the object 101 is a moving body, the object 101 appearing in the Depth image data 500 possibly disappears from the Depth image data 501. Thus, in the present embodiment, the object recognition processing section 303 analyzes the Depth image data 501 and the RGB image data, thereby determining necessity of a change in measurement target object (Step S112).

In Step S112, for example, in a case in which the region of the object 101 cannot be extracted from the Depth image data 501 or in a case in which the contour of the object 101 cannot be extracted from the RGB image data, the object recognition processing section 303 determines that the change in measurement target object is necessary (Yes in Step S112). In this case, the processing procedure returns to Step S101, and the first imaging section 10 images the Depth image data 500 in the usual range-finding mode. Meanwhile, in a case in which the change in measurement target object is not necessary, the processing is finished (No in Step S112).

Note that there exists a case in which the user wants to change the measurement target object. In this case, when a change operation for the measurement target object is received, the object recognition processing section 303 determines that the change in measurement target object is necessary. For example, an operation of, by the user, tapping the object 102 in the Depth image data or the RGB image corresponds to this change operation.

According to the present embodiment described above, in the case in which the resolution of the object 101 disposed at a near distance from the range-finding device 1 is insufficient with respect to the range-finding criterion, the control section 30 sets the pixel region in which the object 101 appears, to the exposure pixels 200a and further increases the spot diameter such that the exposure pixels 200a can receive the reflected light L2, thereby intentionally unfocusing the spot light L1. Thus, by not only adjusting the spot diameter of the light emission section 11, but also adjusting the positions of the exposure pixels of the light reception section 12, the mismatch therebetween is avoided. As a result, a range-finding capability can be increased.

Moreover, in the present embodiment, the exposure is applied to only the pixels 200 required for the range-finding for the object 101 in the light reception sensor 16. Thus, consumed electric power of the light reception sensor 16 can be reduced.

### (Second Embodiment)

The range-finding device according to a second embodiment has a similar configuration to that of the range-finding device 1 according to the first embodiment. Meanwhile, in the present embodiment, the processing content of the control section 30 is different from that in the first embodiment. Thus, with reference to FIG. 9, a description is given of the processing content of the control section 30.

FIG. 9 is a flowchart for illustrating an example of the processing procedure of the control section 30 according to the second embodiment. In this flowchart, first, as in the first embodiment, the first data processing section 301 acquires the Depth image signals in the usual range-finding mode, from the light reception sensor 16 of the first imaging section 10 (Step S201), and the second data processing section 302 acquires the RGB image signals from the second imaging section 20 (Step S202).

After that, the object recognition processing section 303 detects any one of the object 101 and the object 102 as the main measurement object (Step S203). In Step S103, as in the first embodiment, the object recognition processing section 303 detects the positions of the object 101 and the object 102 from the Depth image data 500 and detects the contour of each of the object 101 and the object 102 from the RGB image data 600 on the basis of the detected position of each object. After that, the object recognition processing section 303 calculates the area of each object on the basis of each of the recognized contours. In the present embodiment, such a point that the object recognition processing section 303 detects, as the main measurement object, the object 102 which is of the object 101 and the object 102 and is smaller in area is different from the first embodiment. Note that the main measurement object may be detected through the selection operation of the user.

After that, the object recognition processing section 303 determines whether or not the resolution for the main measurement object is sufficient (Step S204). In Step S204, as in the first embodiment, it is determined whether or not the number of the exposure pixels 200a of the object 102 being the main measurement object indicated in the Depth image data 500 exceeds a threshold value.

In a case in which the resolution of the main measurement object is higher than the threshold value, the object recognition processing section 303 determines that this resolution is sufficient (Yes in Step S204). In this case, the processing procedure returns to the processing in Step S201 and Step S202.

Meanwhile, in a case in which the resolution of the main measurement object is equal to or lower than the threshold value, the object recognition processing section 303 determines that this resolution is insufficient (No in Step S204).

In the case described above, the first calculation section 304 calculates magnifications required to satisfy the necessary measurement criterion (Step S205). In Step S205, the first calculation section 304 calculates a degree of the magnification of each of the light reception amount and the pixel region for imaging the object 102 compared with the usual range-finding mode on the basis of the RGB image data 600. That is, the first calculation section 304 calculates a degree of the necessary increase in the light reception amount and a degree of the necessary increase in the number of exposure pixels compared with the usual range-finding mode.

After that, the second calculation section 305 calculates the drive change amount of the light source section 13 on the basis of the magnification calculated in Step S205 (Step S206). In Step S206, for example, the second calculation section 305 calculates, as the drive change amount, an increase amount of the electric power supplied to the light source section 13, which is compared with that in the usual range-finding mode, and an increase/decrease amount of an illumination region of the spot light L1 of the light source section 13, which is compared with that in the usual range-finding mode.

After that, the third calculation section 306 calculates the control amount of the optical system 14 on the basis of the magnification of the light reception amount calculated in Step S205 (Step S207). In Step S207, the third calculation section 306 uses, for example, a conversion coefficient set in advance to convert the magnification to the movement amount of the liquid lens 141.

After that, the fourth calculation section 307 calculates the exposure positions of the light reception sensor 16 on the basis of the magnification of the exposure region calculated in Step S205 (Step S208). In Step S208, the fourth calculation section 307 identifies the pixel region containing the contour of the object 102 extracted through use of the RGB image data 600. The fourth calculation section 307 calculates the positions of the pixels 200 corresponding to this pixel region in the Depth image data 500 as the positions of the exposure pixels 200a.

After that, the light source drive control section 308, the optical system drive control section 309, and the light reception sensor drive control section 310 execute the drive control for the light source section 13, the optical system 14, and the light reception sensor 16, respectively (Step S209). In Step S209, the light source drive control section 308 changes, for example, laser power and a light emission position of the light source section 13 on the basis of the drive change amount calculated in Step S206. Moreover, the optical system drive control section 309 adjusts the voltage supplied to the VCM 142 on the basis of the control amount calculated in Step S207, thereby moving the liquid lens 141. Further, the light reception sensor drive control section 310 executes such control processing that pixel signals are output from the exposure pixels 200a disposed at the exposure positions calculated in Step S208.

The imaging mode of the first imaging section 10 is changed from the usual range-finding mode to a far distance range-finding mode by the processing in Step S205 to Step S209. After that, the first imaging section 10 generates the Depth image signals in the far-distance range-finding mode, and the second imaging section 20 generates the RGB image signals.

FIG. 10 is a schematic diagram for illustrating the Depth image data imaged in the far-distance range-finding mode. The Depth image data 502 illustrated in FIG. 10 is imaged through use of the spot light L1 having a spot diameter R3 increased from the spot diameter R1 in the usual range-finding mode such that the entire object 102 is included in the exposure pixel 200a region. Thus, in this Depth image data 502, the resolution of the object 102 is higher than that in the Depth image data 500 imaged in the usual range-finding mode.

Moreover, in a case in which the object 102 is a moving body, the object 102 appearing in the Depth image data 500 possibly disappears from the Depth image data 503. Thus, in the present embodiment, the object recognition processing section 303 analyzes the Depth image data 502 and the RGB image data, thereby determining necessity of a change in measurement target object (Step S212).

In Step S212, for example, in a case in which the region of the object 102 cannot be extracted from the Depth image data 502 or in a case in which the contour of the object 102 cannot be extracted from the RGB image data, the object recognition processing section 303 determines that the change in measurement target object is necessary (Yes in Step S212). In this case, the processing procedure returns to Step S201 and the first imaging section 10 images the Depth image data 500 in the usual range-finding mode. Meanwhile, in a case in which the change in measurement target object is not necessary, the processing is finished (No in Step S212).

Note that there exists the case in which the user wants to change the measurement target object. In this case, when the change operation for the measurement target object is received, the object recognition processing section 303 determines that the change in measurement target object is necessary. For example, an operation of, by the user, tapping the object 101 in the Depth image data or the RGB image corresponds to this change operation.

According to the present embodiment described above, in the case in which the resolution of the object 102 disposed at a far distance from the range-finding device 1 is insufficient with respect to the range-finding criterion, the control section 30 sets the pixel region in which the object 102 appears, to the exposure pixels 200a and further restricts the illumination region of the spot light L1 such that only the exposure pixels 200a can receive the reflected light L2. As described above, also in the case in which the measurement target is disposed at a far distance, by not only adjusting the spot light L1 of the light emission section 11, but also adjusting the positions of the exposure pixels of the light reception section 12, the mismatch therebetween is avoided. As a result, the range-finding capability can be increased.

Moreover, in the present embodiment, the object 101 is omitted in the light emission section 11, thereby concentrating the illumination region of the spot light L1 to the object 102, and the luminance of the spot light L1 is increased. As a result, an increase of consumed electric power can be suppressed.

### <Application Example to Mobile Body>

The technology according to the present disclosure (present technology) can be applied to various products. For example, the technology according to the present disclosure may be embodied as a device mounted to a mobile body of any type such as a vehicle, an electric vehicle, a hybrid electric vehicle, a motor cycle, a bicycle, a personal mobility, an airplane, a drone, a vessel, and a robot.

FIG. 11 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in FIG. 11, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 11, an audio speaker 12061, a display section 12062, and an instrument panel 12063 are illustrated as the output device. The display section 12062 may, for example, include at least one of an on-board display and a head-up display.

FIG. 12 is a diagram depicting an example of the installation position of the imaging section 12031.

In FIG. 12, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 12 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

The example of the vehicle control system to which the technology according to the present disclosure can be applied has been described. The technology according to the present disclosure can be applied to, for example, the imaging section 12031 of the configuration described above. Specifically, the range-finding device described above can be implemented on the imaging section 12031. The range-finding capability can be increased by applying the technology according to the present disclosure to the imaging section 12031. As a result, functionality and safety of the vehicle 12100 can be increased.

It is to be noted that the present technology can be configured as follows.
(1) A range-finding device including:
   a first imaging section that includes a light emission section that emits spot light to one or more objects being range-finding targets and a light reception section that outputs a first image signal including data on distances to the objects on the basis of a result obtained by light reception of reflected light being the spot light reflected on the objects;
   a second imaging section that outputs a second image signal obtained by converting a plurality of beams of color light incident at the time of imaging of the objects to an electric signal; and
   a control section that controls drive of the light emission section and the light reception section on the basis of the first image signal and the second image signal.
(2) The range-finding device according to (1), in which
   the light emission section includes a light source section that generates the spot light and an optical system that adjusts a spot diameter of the spot light,
   the light reception section includes a light reception sensor that includes a plurality of pixels for receiving the reflected light and generating the first image signal, and
   the control section executes determination processing relating to a resolution of the object on the basis of the first image signal and the second image signal, executes calculation processing of calculating, according to a determination result of the resolution, a drive change amount of the light source section, a control amount of the optical system, and an exposure position in the plurality of pixels, and controls drive of the light source section, the optical system, and the light reception sensor on the basis of a calculation result.
(3) The range-finding device according to (2), in which the control section executes the determination processing and the calculation processing for a main measurement object selected from a plurality of objects having distances from the range-finding device different from one another.
(4) The range-finding device according to (3), in which the control section extracts a pixel region in which the main measurement object is disposed from Depth image data generated by processing the first image signal and extracts a contour of the main measurement object from an RGB image generated by processing the second image signal.
(5) The range-finding device according to (4), in which
   the resolution is the number of exposure pixels in the pixel region of the main measurement object, and
   the control section executes the calculation processing in a case in which the number of exposure pixels is equal to or less than a threshold value set in advance according to a range-finding criterion.
(6) The range-finding device according to (5), in which the control section calculates a resolution and a light reception amount of the light reception sensor required to satisfy the range-finding criterion in a case in which the number of exposure pixels is equal to or smaller than the threshold value.
(7) The range-finding device according to (6), in which the control section calculates the drive change amount and the control amount on the basis of the light reception amount and calculates the exposure position on the basis of the resolution.
(8) The range-finding device according to (7), in which the control section calculates the drive change amount and the control amount such that luminance and the spot diameter of the spot light change according to the light reception amount.
(9) The range-finding device according to (7) or (8), in which the control section calculates the exposure position such that the exposure pixel is included in the pixel region of the main measurement object according to the resolution.
(10) The range-finding device according to (9), in which the control section calculates the control amount such that the spot diameter increases in a case in which, of the plurality of objects, the main measurement object is disposed closer to the range-finding device than another object.
(11) The range-finding device according to (9), in which the control section calculates the exposure position such that only the pixel region of the main measurement object is the exposure pixel in a case in which, of the plurality of objects, the main measurement object is disposed farther from the range-finding device than another object.
(12) The range-finding device according to (11), in which the control section calculates the control amount for reducing an illumination region of the spot light such that only the exposure pixel receives the reflected light.
(13) A range-finding method through use of a first imaging section including a light emission section and a light reception section and a second imaging section, in which
   the light emission section emits spot light toward one or more objects being range-finding targets,
   the light reception section outputs a first image signal including data on a distance to the object on the basis of a result obtained by light reception of reflected light being the spot light reflected on the object,
   the second imaging section outputs a second image signal obtained by converting a plurality of beams of color light incident at the time of imaging of the objects to an electric signal, and
   drive of the light emission section and the light reception section is controlled on the basis of the first image signal and the second image signal.

### [Reference Signs List]

1: Range-finding device
10: First imaging section
11: Light emission section
12: Light reception section
13: Light source section
14: Optical system
16: Light reception sensor
20: Second imaging section
30: Control section
101: Object
102: Object
L1: Spot light
L2: Reflected light

## Claims

1. A range-finding device comprising:
a first imaging section that includes a light emission section that emits spot light to one or more objects being range-finding targets and a light reception section that outputs a first image signal including data on distances to the objects on a basis of a result obtained by light reception of reflected light being the spot light reflected on the objects;
a second imaging section that outputs a second image signal obtained by converting a plurality of beams of color light incident at a time of imaging of the objects to an electric signal; and
a control section that controls drive of the light emission section and the light reception section on a basis of the first image signal and the second image signal.

2. The range-finding device according to claim 1, wherein
the light emission section includes a light source section that generates the spot light and an optical system that adjusts a spot diameter of the spot light,
the light reception section includes a light reception sensor that includes a plurality of pixels for receiving the reflected light and generating the first image signal, and
the control section executes determination processing relating to a resolution of the object on the basis of the first image signal and the second image signal, executes calculation processing of calculating, according to a determination result of the resolution, a drive change amount of the light source section, a control amount of the optical system, and an exposure position in the plurality of pixels, and controls drive of the light source section, the optical system, and the light reception sensor on a basis of a calculation result.

3. The range-finding device according to claim 2, wherein the control section executes the determination processing and the calculation processing for a main measurement object selected from a plurality of objects having distances from the range-finding device different from one another.

4. The range-finding device according to claim 3, wherein the control section extracts a pixel region in which the main measurement object is disposed from Depth image data generated by processing the first image signal and extracts a contour of the main measurement object from an RGB image generated by processing the second image signal.

5. The range-finding device according to claim 4, wherein
the resolution is the number of exposure pixels in the pixel region of the main measurement object, and
the control section executes the calculation processing in a case in which the number of exposure pixels is equal to or less than a threshold value set in advance according to a range-finding criterion.

6. The range-finding device according to claim 5, wherein the control section calculates a resolution and a light reception amount of the light reception sensor required to satisfy the range-finding criterion in a case in which the number of exposure pixels is equal to or smaller than the threshold value.

7. The range-finding device according to claim 6, wherein the control section calculates the drive change amount and the control amount on a basis of the light reception amount and calculates the exposure position on a basis of the resolution.

8. The range-finding device according to claim 7, wherein the control section calculates the drive change amount and the control amount such that luminance and the spot diameter of the spot light change according to the light reception amount.

9. The range-finding device according to claim 7, wherein the control section calculates the exposure position such that the exposure pixel is included in the pixel region of the main measurement object according to the resolution.

10. The range-finding device according to claim 9, wherein the control section calculates the control amount such that the spot diameter increases in a case in which, of the plurality of objects, the main measurement object is disposed closer to the range-finding device than another object.

11. The range-finding device according to claim 9, wherein the control section calculates the exposure position such that only the pixel region of the main measurement object is the exposure pixel in a case in which, of the plurality of objects, the main measurement object is disposed farther from the range-finding device than another object.

12. The range-finding device according to claim 11, wherein the control section calculates the control amount for reducing an illumination region of the spot light such that only the exposure pixel receives the reflected light.

13. A range-finding method through use of a first imaging section including a light emission section and a light reception section and a second imaging section, wherein
the light emission section emits spot light toward one or more objects being range-finding targets,
the light reception section outputs a first image signal including data on a distance to the object on a basis of a result obtained by light reception of reflected light being the spot light reflected on the object,
the second imaging section outputs a second image signal obtained by converting a plurality of beams of color light incident at a time of imaging of the objects to an electric signal, and
drive of the light emission section and the light reception section is controlled on a basis of the first image signal and the second image signal.
